# EUROPEAN PATENT APPLICATION

(11) **EP 2 741 279 A2**
(43) Date of publication of application: **11.06.2014**
(21) Application number: 13196342.3
(22) Date of filing: 10.12.2013
(51) Int. Cl.: G09G 3/20

(54) **Array substrate, 3D display device and driving method for the same**

(30) Priority: 10.12.2012 CN 201210528331
(71) Applicant: Boe Technology Group Co. Ltd., Beijing 100015 (CN); Beijing BOE Display Technology Co., Ltd., Beijing 100176 (CN)
(72) Inventor: Zhang, Liang, 100176 BEIJING (CN); Shao, Xibin, 100176 BEIJING (CN); Wang, Dan, 100176 BEIJING (CN); Hu, Weihao, 100176 BEIJING (CN); Xu, Yizhen, 100176 BEIJING (CN); Hou, Shuai, 100176 BEIJING (CN)
(74) Representative: Tischner, Oliver

(57) **Abstract**

The present invention belongs to the field of 3D display, and provides an array substrate, a 3D display device and a driving method for the same. The array substrate comprising a substrate and m rows and 2n columns of pixel units formed on the substrate in a matrix form. The array substrate further comprises data lines each of which corresponds to the pixel units in each row and gate lines each of which corresponds to the pixel units in each column. Each of the data lines is connected to source electrodes of thin film transistors in the corresponding pixel units, and each of gate lines is connected to gate electrodes of the thin film transistors in the corresponding pixel units. The gate lines receive a gate scanning signal according to a predetermined period.

## Description

### TECHNICAL FIELD

The present invention relates to the field of 3D display, in particular to an array substrate, a 3D display device and a driving method for the same.

### BACKGROUND

With the development of displaying technology, the 3D display technology has become one of important technologies for the display device. An active shutter 3D display technology may implement the 3D displaying with low cost. A 3D effect is achieved by improving the refresh rate of the picture, and both eyes of a viewer may see the corresponding images for the left eye and the right eye respectively by the fast switching of the 3D glasses, so that the effect of stereo (three-dimensional) pictures can be achieved.

Due to the requirements of human eyes on the reception of continuous images, it is required to provide an image with a refresh rate of at least 60Hz for each eye. So, the display device must have a refresh rate up to 120Hz, and correspondingly a driving frequency for a driving circuit of the display device needs to be increased to 120Hz too, which results in a decrease in the charging time for each pixel electrode. In order to ensure a charging rate for the pixel electrode, usually it needs to add a line width in the display device, thereby to reduce a load of the display device. However, this will reduce the transmittance of the display device. In addition, the yield of the display devices with a high refresh rate is low, and as a result the production cost will be increased.

### SUMMARY

An object of the present invention is to provide an array substrate, a 3D display device and a driving method for the same, so as to ensure a charging time for a pixel electrode while increasing a refresh rate of the display device, thereby to achieve 3D display.

In one aspect, embodiments the present invention provide an array substrate comprising a substrate and m rows and 2n columns of pixel units formed on the substrate in a matrix form. The array substrate further comprises data lines each of which corresponds to the pixel units in each row and gate lines each of which corresponds to the pixel units in each column. Each of the data lines is connected to a source electrode of a thin film transistor in the corresponding pixel units, and each of gate lines is connected to a gate electrode of the thin film transistor in the corresponding pixel units.

The gate lines receive a gate scanning signal according to a predetermined period. The gate line corresponding to the pixel units in the (2k-1)^{th} column receives the gate scanning signal within a first time interval of the predetermined period, and the gate line corresponding to the pixel units in the (2k)^{th} column receives the gate scanning signal within a second time interval of the predetermined period, wherein m, n are natural numbers and k is a natural number not less than 1 and not greater than n.

Within the predetermined period, the first time interval precedes the second time interval, or the second time interval precedes the first time interval.

Further, the gate lines corresponding to the pixel units in the first, third, ..., (2k-1)^{th}, ..., (2n-1)^{th} columns receive the gate scanning signal sequentially within the first time interval, and the gate lines corresponding to the pixel units in the second, fourth, ..., (2k)^{th}, ..., (2n)^{th} columns receive the gate scanning signal sequentially within the second time interval.

Further, the first and second time intervals are within a range of 1/480∼1/120s.

In another aspect, embodiments the present invention further provide a 3D display device comprising the abovementioned array substrate and a driving circuit.

The driving circuit comprises a first gate driving circuit configured to provide a gate scanning signal to a gate line corresponding to pixel units in the (2k-1)^{th} column within a first time interval of a predetermined period; and a second gate driving circuit configured to provide a gate scanning signal to a gate line corresponding to pixel units in the (2k)^{th} column within a second time interval of the predetermined period.

The gate line corresponding to the (2k-1)^{th} column is connected to the first gate driving circuit, and the gate line corresponding to the (2k)^{th} column is connected to the second gate driving circuit.

In yet another aspect, embodiments the present invention further provide a method for driving the above-mentioned 3D display device, comprising transmitting a gate scanning signal to a gate line corresponding to pixel units in the (2k-1)^{th} column within a first time interval of a predetermined period; and transmitting a gate scanning signal to a gate line corresponding to pixel units in the (2k)^{th} column within a second time interval of the predetermined period.

Within the predetermined period, the first time interval precedes the second time interval, or the second time interval precedes the first time interval.

Further, the step of transmitting a gate scanning signal to the gate line corresponding to the (2k-1)^{th} column within the first time interval of a predetermined period includes transmitting the gate scanning signal to gate lines corresponding to the first, third, ..., (2k-1)^{th}, ..., and (2n-1)^{th} columns sequentially within the first time interval. The step of transmitting the gate scanning signal to the gate line corresponding to pixel units in the (2k)^{th} column within the second time interval of the predetermined period includes transmitting the gate scanning signal to gate lines corresponding to the second, fourth, ..., (2k)^{th}, ..., and (2n)^{th} columns sequentially within the second time interval.

The present invention has the following advantageous effect.

According to embodiments the present invention, the gate lines of the array substrate receive the gate scanning signal within the predetermined period, i.e., the gate lines corresponding to the pixel units in the odd-numbered columns receive the gate scanning signal within the first time interval of the predetermined period, and the gate lines corresponding to the pixel units in the even-numbered columns receive the gate scanning signal within the second time interval of the predetermined period. The grid driving circuit may be turned on at intervals so as to charge the gate electrodes of the pixel units in the even-numbered and odd-numbered columns respectively. As a result, it is able to reduce the charging time for the array substrate and to ensure the charging time for the pixel electrode while increasing the refresh rate of the display device, thereby to achieve 3D display.

### BRIEF DESCRIPTION OF THE DRAWINGS

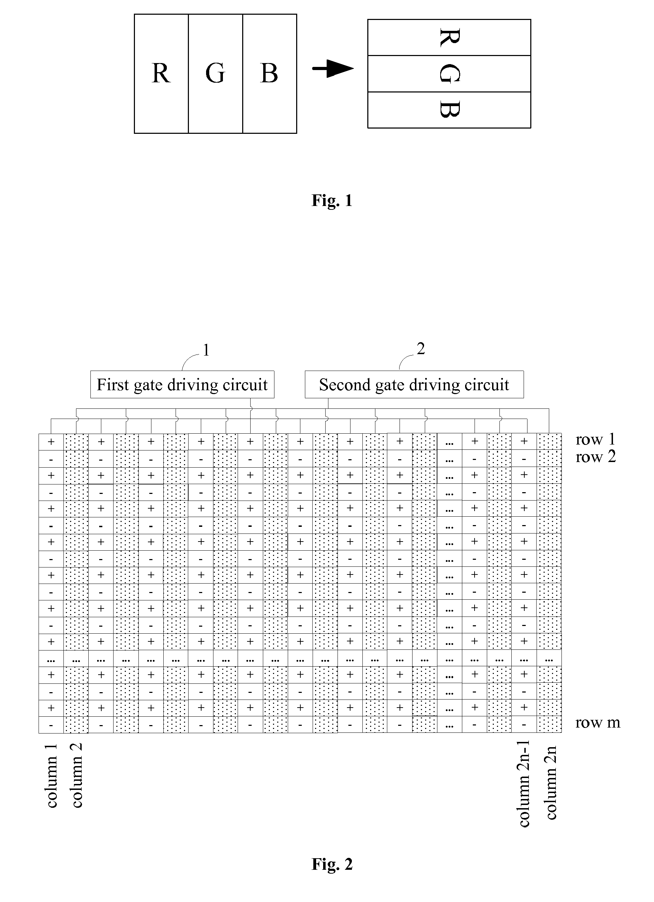

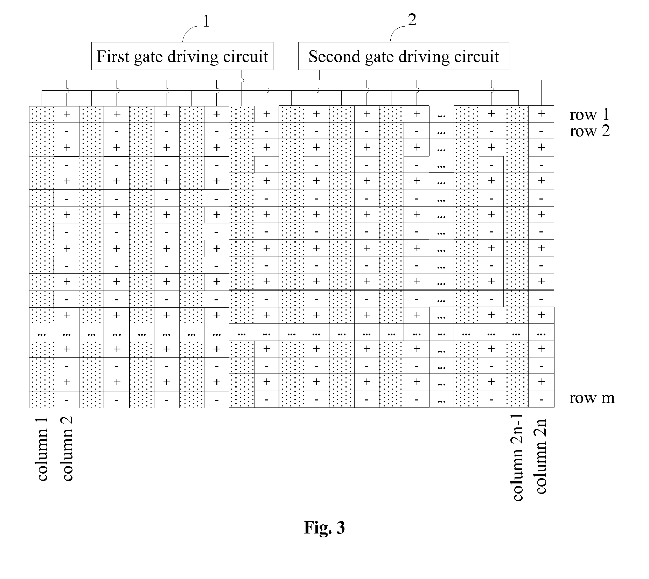

[0018] Fig. 1 is a schematic view showing a color filtering unit on a color filter substrate of a 3D display device according to embodiments of the present invention;
[0019] Fig.2 is a schematic view showing a 3D display device during the left-eye display according to embodiments of the present invention; and
[0020] Fig.3 is a schematic view showing a 3D display device during the right-eye display according to embodiments of the present invention.

### DETAILED DESCRIPTION

To make the objects, the technical solutions and the advantages of the present invention to be more apparent, the present invention is described hereinafter in conjunction with the drawings and the embodiments.

Embodiments the present invention provide an array substrate, a 3D display device and a driving method for the same, so as to ensure a charging time for a pixel electrode while increasing a refresh rate of the display device, thereby to achieve 3D display.

Currently, the radios and televisions in some main regions of the world, such as mainland China, use an L/R mode as a mainstream 3D format, i.e., for an original 60Hz image, a signal source of every frame consists of two parts, one for the left eye and the other for the right eye. In order to be fit for this display mode, embodiments the present invention provide an array substrate, comprising a substrate, and m rows and 2n columns of pixel units formed on the substrate in a matrix form. The array substrate further comprises data lines each of which corresponds to the pixel units in each row and gate lines each of which corresponds to the pixel units in each column. Each of the data lines is connected to source electrodes of thin film transistors in the corresponding pixel units, and each of the gate lines is connected to gate electrodes of the thin film transistors in the corresponding pixel units. The gate lines receive a gate scanning signal in a predetermined period. The gate line corresponding to the pixel units in the (2k-1)^{th} column receives the gate scanning signal within a first time interval of the predetermined period, and the gate line corresponding to the pixel units in the (2k)^{th} column receives the gate scanning signal within a second time interval of the predetermined period, wherein m, n are natural numbers and k is a natural number not less than 1 and not greater than n.

Within the predetermined period, the first time interval precedes the second time interval, or the second time interval precedes the first time interval.

It can be seen that, the structure of an existing array substrate is changed in embodiments the present invention, i.e., the pixel units are rotated clockwise by 90°, and the array substrate comprises the data line corresponding to the pixel units in each row and the gate line corresponding to the pixel units in each column. For the above changed array substrate, the number of drivers for the source electrode is reduced, and the number of drivers for the gate electrode is increased correspondingly. Since the driver for the gate electrode is cheaper than the driver for the source electrode, the cost for manufacturing the array substrate will be reduced.

A refresh rate of a display device may be within a range of 60∼240Hz. When a display device has a refresh rate of 60Hz and the array substrate is provided with 2n columns of pixel units, an opening time for the pixel units in each column, if being scanned column by column, is 1/(2n*60)s. In order to achieve 3D display, it is required to increase the refresh rate of the display device to 120Hz, which however results in a decrease in the charging time for a pixel electrode. To ensure a charging rate of the pixel electrode, usually it needs in the prior art to add a line width of the array substrate, thereby to reduce a load of the display device. However, this will reduce the transmittance of the display device. In addition, the display device with a high refresh rate will have poor image quality due to the insufficient response time.

In order to solve the above problems, the gate scanning signal is provided to the gate line within the predetermined period. The gate lines corresponding to the pixel units in the odd-numbered columns receive the gate scanning signal within the first time interval of the predetermined period, while the gate lines corresponding to the pixel units in the even-numbered columns do not receive the gate scanning signal within the first time interval. The gate lines corresponding to the pixel units in the even-numbered columns receive the gate scanning signal within the second time interval of the predetermined period, while the gate lines corresponding to the pixel units in the odd-numbered columns do not receive the gate scanning signal within the second time interval.

In this embodiment, the predetermined period may be within a range of 1/240∼1/60s, and either of the first and second time intervals may be within a range of 1/480∼1/120s.

Within the first time interval of the predetermined period, the gate lines corresponding to the pixel units in the first, third, ..., (2k-1)^{th}, ..., and (2n-1)^{th} columns receive the gate scanning signal sequentially so as to display the pixel units in the odd-numbered columns, and the gate lines corresponding to the pixel units in the second, fourth, ..., (2k)^{th}, ..., and (2n)^{th} columns do not receive the gate scanning signal, i.e., the pixel units in the even-numbered columns are displayed in black.

Within the second time interval of the predetermined period, the gate lines corresponding to the pixel units in the second, fourth, ..., (2k)^{th}, ..., and (2n)^{th} columns receive the gate scanning signal sequentially so as to display the pixel units in the even-numbered columns, and the gate lines corresponding to the pixel units in the first, third, ..., (2k-1)^{th}, ..., and (2n-)^{th} columns do not receive the gate scanning signal, i.e., the pixel units in the odd-numbered columns are displayed in black.

In the above-mentioned procedure, a data driving circuit of the array substrate will normally provide a data signal to the data line corresponding to the pixel units. However, when the gate line corresponding to the pixel units does not receive the gate scanning signal, the thin film transistor of the pixel units cannot be turned on, and the pixel units will be displayed in black.

According to embodiments the present invention, the array substrate may refresh an image 120 times within 1s, so it has a refresh rate of 120 Hz. If 2n columns of pixel units are provided on the array substrate, the opening time for the pixel units, if being scanned column by column, will be (1/120)/(2n/2)s. It can be seen that, in order to achieve 3D display, although the refresh rate of the array substrate of embodiments the present invention is increased to 120 Hz, as twice as the original refresh rate, it is still able to ensure a sufficiently long charging time for the pixel electrode as well as a sufficiently long response time for the display device, thereby to ensure the image quality.

According to embodiments the present invention, the grid driving circuits are turned on at intervals so as to charge the pixel units in the even-numbered and odd-numbered columns respective. As a result, it is able to reduce the charging time for the array substrate, and to ensure the charging time for the pixel electrode while increasing the refresh rate of the display device, thereby to achieve 3D display.

As shown in Figs. 1-3, embodiments the present invention further provide a 3D display device comprising the above-mentioned array substrate and a driving circuit. The driving circuit comprises a first gate driving circuit 1 configured to provide a gate scanning signal to a gate line corresponding to pixel units in the (2k-1)^{th} column within a first time interval of a predetermined period; and a second gate driving circuit 2 configured to provide a gate scanning signal to a gate line corresponding to pixel units in the (2k)^{th} column within a second time interval of the predetermined period.

The display device of the present invention may be a liquid crystal display, a liquid crystal TV, an OLED display, an OLED TV, an electronic paper, a mobile phone or a tablet PC.

Embodiments the present invention further provide a method for driving the above-mentioned 3D display device, comprising transmitting a gate scanning signal to a gate line corresponding to pixel units in the (2k-1)^{th} column within a first time interval of a predetermined period; and transmitting a gate scanning signal to a gate line corresponding to pixel unit in the (2k)^{th} column within a second time interval of the predetermined period.

Within the predetermined period, the first time interval precedes the second time interval, or the second time interval precedes the first time interval.

The 3D display device and a driving method for the same are described hereinafter in conjunction with Figs. 1, 2 and 3.

Currently, the radios and televisions in some main regions of the world, such as mainland China, use an L/R mode as a mainstream 3D format, i.e., for an original 60Hz image, a signal source of every frame consists of two parts, one for the left eye and the other for the right eye. In order to be fit for this display mode, as shown in Figs.2 and 3, m rows and 2n columns of pixel units are formed on the array substrate of the 3D display device. The gate line corresponding to the pixel units in the (2k-1)^{th} column, i.e., the odd-numbered column, is connected to the first gate driving circuit 1, and the gate line corresponding to the pixel units in the (2k)^{th} column, i.e., the even-numbered column, is connected to the second gate driving circuit 2.

It can be seen that, the structure of an existing array substrate is changed, i.e., the pixel units are rotated clockwise by 90°, and the array substrate comprises a data line corresponding to the pixel units in each row and a gate line corresponding to the pixel units in each column. As shown in Fig. 1, the color filtering unit on the color filter substrate corresponding to the array substrate is also rotated clockwise by 90°.

In order to achieve 3D display, in embodiments of the present invention, the predetermined period may be set as 1/60s, and either of the first and second time intervals may be 1/120s.

Within the first time interval of the predetermined period, as shown in Fig.2, the first gate driving circuit 1 transmits, column by column, the gate scanning signal to the gate lines corresponding to the pixel units in the first, third, ..., (2k-1)^{th}, ..., and (2n-)^{th} columns so as to display the pixel units in the odd-numbered columns, while the second gate driving circuit 2 does not transmit the gate scanning signal to the gate lines corresponding to the pixel units in the second, fourth, ..., (2k)^{th}, ... and (2n)^{th} columns, i.e., the pixel units in the even-numbered columns are displayed in black. At this time, the pixels units in left, odd-numbered are used to provide an image to the left eye of a user.

Within the second time interval of the predetermined period, an image is provided to the right eye of the user through a switch of active shutter glasses, as shown in Fig.3. At this time, the second gate driving circuit 2 transmits, column by column, the gate scanning signal to the gate lines corresponding to the pixel units in the second, fourth, ..., (2k)^{th}, ..., and (2n)^{th} columns so as to display the pixel units in the even-numbered columns, while the first gate driving circuit 1 does not transmit the gate scanning signal to the gate lines corresponding to the pixel units in the first, third, ..., (2k-1)^{th}, ..., and (2n-1)^{th} columns, i.e., the pixel units in the odd-numbered columns are displayed in black. The pixel units in the right, even-numbered columns are used to provide an image to the right eye of the user.

In the above procedure, the data driving circuit of the array substrate will normally provide a data signal to the data line corresponding to the pixel units. However, when the gate line corresponding to the pixel units does not receive the gate scanning signal, the thin film transistor of the pixel units cannot be turned on, and the pixel units will be displayed in black.

According to embodiments the present invention, the 3D display device may refresh an image 120 times within 1s, so it has a refresh rate of 120 Hz. If 2n columns of pixel units are provided on the array substrate of the 3D display device, the opening time for the pixel units, if being scanned column by column, will be (1/120)/(2n/2)s. It can be seen that, in order to achieve 3D display, although the refresh rate of the 3D display device of embodiments the present invention is increased to 120 Hz, as twice as the original refresh rate, it is still able to ensure a sufficiently long charging time for the pixel electrode as well as a sufficiently long response time for the display device, thereby to ensure the image quality.

According to embodiments the present invention, the grid driving circuits are turned on at intervals so as to charge the pixel units in the even-numbered and odd-numbered columns respective. As a result, it is able to reduce the charging time for the 3D display device, and to ensure the charging time for the pixel electrode while increasing the refresh rate of the display device, thereby to achieve 3D display.

The above are merely the preferred embodiments of the present invention. It should be noted that, a person skilled in the art may further make improvements and modifications without departing from the principle of the present invention, and these improvements and modifications shall also be considered as the scope of the present invention.

## Claims

1. An array substrate comprising a substrate and m rows and 2n columns of pixel units formed on the substrate in a matrix form,
wherein the array substrate further comprises data lines each of which corresponds to the pixel units in each row and gate lines each of which corresponds to the pixel units in each column, each of the data lines is connected to source electrodes of thin film transistors in the corresponding pixel units, and each of the gate lines is connected to gate electrodes of the thin film transistors in the corresponding pixel units,
wherein the gate lines receive a gate scanning signal in a predetermined period, wherein the gate line corresponding to the pixel units in the (2k-1)^{th} column receives the gate scanning signal within a first time interval of the predetermined period, the gate line corresponding to the pixel units in the (2k)^{th} column receives the gate scanning signal within a second time interval of the predetermined period, wherein m, n are natural numbers and k is a natural number not less than 1 and not greater than n.

2. The array substrate according to claim 1, wherein within the predetermined period, the first time interval precedes the second time interval, or the second time interval precedes the first time interval.

3. The array substrate according to claim 1 or 2, wherein
the gate lines corresponding to the pixel units in the first, third, ..., (2k-1)^{th}, ..., (2n-)^{th} columns receive the gate scanning signal sequentially within the first time interval, and
the gate lines corresponding to the pixel units in the second, fourth, ..., (2k)^{th}, ..., (2n)^{th} columns receive the gate scanning signal sequentially within the second time interval.

4. The array substrate according to any one of claims 1 to 3, wherein the first and second time intervals are within a range of 1/480∼1/120s.

5. A 3D display device, comprising the array substrate according to any one of claims 1 to 4 and a driving circuit (1, 2).

6. The 3D display device according to claim 5, wherein the driving circuit comprises:
a first gate driving circuit (1), configured to provide a gate scanning signal to a gate line corresponding to pixel units in the (2k-1)^{th} column within a first time interval of a predetermined period; and
a second gate driving circuit (2) configured to provide a gate scanning signal to a gate line corresponding to pixel units in the (2k)^{th} column within a second time interval of the predetermined period.

7. The 3D display device according to claim 6, wherein
the gate line corresponding to the (2k-1)^{th} column is connected to the first gate driving circuit (1), and the gate line corresponding to the (2k)^{th} column is connected to the second gate driving circuit (2).

8. A method for driving the 3D display device according to any one of claims 5 to 7, comprising:
transmitting a gate scanning signal to a gate line corresponding to pixel units in the (2k-1)^{th} column within a first time interval of a predetermined period; and
transmitting a gate scanning signal to a gate line corresponding to pixel units in the (2k)^{th} column within a second time interval of the predetermined period.

9. The method according to claim 8, wherein within the predetermined period, the first time interval precedes the second time interval, or the second time interval precedes the first time interval.

10. The method according to claim 8 or 9, wherein the step of transmitting the gate scanning signal to the gate line corresponding to the (2k-1)^{th} column within the first time interval of a predetermined period includes:
transmitting the gate scanning signal to gate lines corresponding to the first, third, ..., (2k-1)^{th}, ..., and (2n-)^{th} columns sequentially within the first time interval, and
the step of transmitting the gate scanning signal to the gate line corresponding to pixel units in the (2k)^{th} column within a second time interval of the predetermined period includes:
transmitting the gate scanning signal to gate lines corresponding to the second, fourth, ..., (2k)^{th}, ..., and (2n)^{th} columns sequentially within the second time interval.
